# EUROPÄISCHE PATENTSCHRIFT

(11) **EP 3 679 366 B1**
(45) Veröffentlichungstag und Bekanntmachung des Hinweises auf die Patenterteilung: **28.06.2023**
(21) Anmeldenummer: 18793584.6
(22) Anmeldetag: 12.10.2018
(51) Int. Cl.: G01N 29/04, G01R 31/34, G01N 29/22, G01N 29/265, G01N 29/28

(54) **PRÜFUNG VON NUTVERSCHLUSSKEILEN EINES GENERATORROTORS**
TESTING OF SLOT BREECH WEDGES OF A GENERATOR ROTOR
CONTRÔLE DE CALES DE FERMETURES D'ENCOCHES D'UN ROTOR DE GÉNÉRATEUR

(30) Priorität: 14.11.2017 DE 102017220274
(43) Veröffentlichungstag der Anmeldung: 15.07.2020
(73) Patentinhaber: Siemens Energy Global GmbH & Co. KG, 81739 München (DE)
(72) Erfinder: CLOSSEN-VON LANKEN SCHULZ, Michael, 47661 Issum (DE); DREISCHER, Paul, 44892 Bochum (DE); OBERMAYR, Stefan, 47199 Duisburg (DE)
(86) Internationale Anmeldenummer: PCT/EP2018/077830
(87) Internationale Veröffentlichungsnummer: WO 2019/096504

(56) Entgegenhaltungen:
- CH-A1- 703 662
- DE-A1-102016 226 161
- US-A- 5 557 216
- US-B1- 7 201 055

## Beschreibung

Die vorliegende Erfindung betrifft die Prüfung von Nutverschlusskeilen, die am Außenumfang eines von einem Stator umgebenen Rotors eines Generators vorgesehen sind. Nutverschlusskeile dienen dazu, die am Rotor bzw. Läufer eines Generators angeordneten Kupferwicklungen an Ort und Stelle zu halten. Hierzu werden sie in bekannter Weise zwischen den Rotorzähnen des Rotorballens eingesetzt. Während des Betriebs des Generators können die Nutverschlusskeile beschädigt werden. Insbesondere kommt es ausgehend von den Flanken der Nutverschlusskeile zu Rissbildungen, da dort die höchsten Kräfte wirken. Werden derartige Defekte nicht rechtzeitig behoben, so kann dies zur Zerstörung des Generators führen. Entsprechend ist die Überprüfung von Nutverschlusskeilen Bestandteil der regelmäßigen Revision von Kraftwerken, um Beschädigungen möglichst frühzeitig und vollumfänglich ausfindig zu.

Zur Prüfung von Nutverschlusskeilen wird normalerweise der gesamte Rotor des Generators aus dem Stator ausgebaut und in ein für Revisionszwecke vorgesehenes Lager eingespannt. Die Nutverschlusskeile werden dann unter Einsatz eines Ultraschallprüfkopfes geprüft. Erst nach abgeschlossener Prüfung und Auswertung der Prüfergebnisse einschließlich der Bewertung und ggf. erforderlicher Reparaturarbeiten kann der Generator dann wieder zusammengebaut und in Betrieb genommen werden. Durch die De- und Remontage des Rotors ergeben sich selbst bei Befundfreiheit der Nutverschlusskeile sehr lange Stillstandszeiten, die hohe Kosten nach sich ziehen. Die DE 102016226161A1 offenbart ein System zum Prüfen von Rotornutkeilen vor Ort, mit einer Steuereinheit und einem ferngesteuerten Wagen. Der Wagen enthält ein Antriebsmodul zum Bewegen des Wagens durch einen Luftspalt zwischen dem Rotor und dem Stator einer dynamoelektrischen Maschine, ein Ultraschall-Prüfmodul, und einen Koppelmittelaplikator, wobei das Antriebsmodul einen, magnetische Adhäsion benutzenden Antriebszug enthält.

Die CH 703 662 A1 offenbart ein Inspektionsfahrzeug für einen Generator, das in einen Luftspalt zwischen Rotor und Stator eingesetzt wird und dort mittels magnetischer Rollen angetrieben wird; jede magnetische Rolle ist über einen Motor drehend antreibbar.

Ausgehend von diesem Stand der Technik ist es eine Aufgabe der vorliegenden Erfindung, die Stillstandszeiten bei der Prüfung von Nutverschlusskeilen zu reduzieren.

Zur Lösung dieser Aufgabe schafft die vorliegende Erfindung, wie im Anspruch 1 definiert, einen Prüfroboter zur Prüfung von Nutverschlusskeilen, die am Außenumfang eines von einem Stator umgebenen Rotors eines Generators vorgesehen sind, umfassend ein ein Antriebssystem aufnehmendes Fahrgestell, eine Positionserfassungseinrichtung, eine Steuerung, die das Antriebssystem basierend auf von der Positionserfassungseinrichtung erfassten Daten steuert, am Fahrgestell angebrachte Magnete, die derart positioniert und ausgelegt sind, dass sie das Fahrgestell an einem magnetischen Untergrund anhaftend halten, zumindest einen an dem Fahrgestell angeordneten, von der Unterseite des Fahrgestells frei zugänglichen sowie auf- und abwärts bewegbaren Ultraschallprüfkopf und zumindest eine am Fahrgestell vorgesehene, dem Ultraschallprüfkopf zugeordnete Koppelmittelapplikationseinrichtung. Ein derartiger Prüfroboter kann bei geeignet gewählten Außenabmessungen in den zwischen dem Rotor und dem Stator eines Generators vorhandenen Ringspalt eingesetzt und dann entlang der Nutverschlusskeile verfahren werden, um die Prüfung unter Einsatz des zumindest einen Ultraschallprüfkopfes durchzuführen. Entsprechend ist es nicht erforderlich, den Rotor zur Durchführung der Prüfung aus dem Stator auszubauen, was zumindest bei Befundfreiheit eine große Zeitersparnis mit sich bringt. Zur Steuerung der Bewegung des Prüfroboters innerhalb des Ringspaltes ist der Prüfroboter mit einer Positionserfassungseinrichtung versehen, die aktuelle Ist-Positionsdaten erfasst, mit gespeicherten Soll-Positionsdaten abgleicht und das Antriebssystem basierend auf dem Ist-Soll-Vergleich ansteuert. Die am Fahrgestell angebrachten Magnete sorgen dabei für eine gute Anhaftung des Fahrgestells am Rotor. Die Stärke und Anzahl der Magneten ist dabei bevorzugt derart gewählt, dass sie das Eigengewicht des Prüfroboters tragen, so dass dieser entlang des gesamten Umfangs des Rotors problemlos verfahren werden kann. Über die Koppelmittelapplikationseinrichtung wird der Auftrag einer hinreichenden Menge an Koppelmittel gewährleistet, um die ordnungsgemäße Prüfung der Nutverschlusskeile unter Einsatz des zumindest einen Ultraschallprüfkopfes sicherstellen zu können. Der Ultraschallprüfkopf ist auf- und abwärts bewegbar, so dass er zur Durchführung einer Prüfung in Abwärtsrichtung auf den Rotor bzw. auf das diesen bedeckende Koppelmittel aufgesetzt werden kann.

Das Fahrgestell ist vorteilhaft additiv aus einem Fotopolymer hergestellt. So lassen sich die Abmessungen des Fahrgestells an einem Rechner in einfacher Art und Weise an das zur Verfügung stehende Spaltmaß des zwischen dem die zu prüfenden Nutverschlusskeile aufweisenden Rotor und dem Stator vorhandenen Ringspaltes eines Generators anpassen und das Fahrgestell innerhalb kurzer Zeit fertigen. Nach der Montage der übrigen Komponenten am Fahrgestell, die nur wenig Zeit in Anspruch nimmt, ist dann ein optimal an die äußeren Anforderungen angepasster Prüfroboter einsatzbereit.

Das Antriebssystem weist drei oder vier am Fahrgestell drehbar gehaltene Räder auf, wobei jedes Rad über einen Schrittmotor drehend antreibbar und über einen Servomotor lenkbar ist. Damit kann die Bewegung des Prüfroboters sehr präzise gesteuert werden.

Bevorzugt sind die Räder mit einem groben Schleifmittel beschichtet, um die Reibung während des Abrollens der Räder auf dem Rotor zu erhöhen und entsprechend den Vortrieb des Prüfroboters zu optimieren. Untersuchungen haben ergeben, dass sich mit Schleifmittel die besten Ergebnisse im Vergleich zu anderen Materialien erzielen lassen, wie beispielsweise Gummi oder dergleichen.

Als Magnete kommen vorteilhaft Neodym-Magnete zum Einsatz. Es hat sich herausgestellt, dass sich der Prüfroboter bei geeigneter Wahl der Positionen und der Anzahl der einzelnen Neodym-Magnete, die von dem Eigengewicht des Prüfroboters abhängig ist, auf dem Rotor sogar über Kopf verlässlich bewegen lässt.

Gemäß einer Ausgestaltung der vorliegenden Erfindung weist die Positionserfassungseinrichtung zumindest zwei am Fahrgestell angeordnete, abwärts gerichtete Kameras und Leuchten zur Ausleuchtung der Kamerabilder auf. Die Kameras werden vorteilhaft dazu eingesetzt, die Position des Prüfroboters bezogen auf die zwischen den Nutverschlusskeilen und dem Rotorballen vorhanden Fugen zu ermitteln, so dass die Steuerung des Antriebs softwareseitig nach Art einer Linienverfolgung ("Line Follower") entlang einer Nut erfolgen kann.

Der zumindest eine Ultraschallprüfkopf ist vorteilhaft orthogonal zu seiner Prüfrichtung an dem Fahrgestell angeordnet und mit einem die vom Ultraschallprüfkopf emittierten Ultraschallwellen orthogonal umlenkenden Vorlaufkeil versehen, der bevorzugt aus Plexiglas hergestellt ist. Auf diese Weise kann die Bauhöhe des Prüfroboters verringert werden, was für den Einsatz des Prüfroboters in Ringspalten geringen Spaltmaßes essentiell sein kann.

Gemäß einer Ausgestaltung des erfindungsgemäßen Prüfroboters ist der zumindest eine Ultraschallprüfkopf über zumindest einen Servomotor auf- und abwärts bewegbar, insbesondere über zwei Servomotoren, was zu einer sehr präzisen und verlässlichen Funktionalität führt.

Bevorzugt sind beabstandet von dem Prüfroboter eine Pumpe und ein mit der zumindest einen Koppelmittelapplikationseinrichtung über eine Koppelmittelleitung verbundenes Koppelmittelreservoir vorgesehen, die in einem gemeinsamen Gehäuse angeordnet sein können.

Zur Lösung der eingangs genannten Aufgabe schafft die vorliegende Erfindung ferner ein Verfahren zur Prüfung von Nutverschlusskeilen, die am Außenumfang eines von einem Stator umgebenen Rotors eines Generators vorgesehen sind, unter Verwendung eines in einen zwischen dem Rotor und dem Stator vorhandenen Ringspalt eingesetzten Prüfroboters der erfindungsgemäßen Art.

Vorteilhaft erfasst die Positionserfassungseinrichtung zumindest eine Ist-Ausrichtung des Prüfroboters zu einer zwischen einem Nutverschlusskeil und einem Rotorballen vorhandenen Fuge, wobei die Steuerung die erfasste Ist-Ausrichtung mit einer gespeicherten Soll-Ausrichtung abgleicht und das Antriebssystem basierend auf dem Ist-Soll-Abgleich ansteuert, insbesondere die Schwenkstellung der Räder. Auf diese Weise wird eine zuverlässige Bewegung des Prüfroboters entlang eines zu prüfenden Nutverschlusskeils gewährleistet.

Weitere Merkmale und Vorteile der vorliegenden Erfindung werden anhand der nachfolgenden Beschreibung eines Prüfroboters gemäß einer Ausführungsform der vorliegenden Erfindung unter Bezugnahme auf die beiliegende Zeichnung deutlich. Darin ist
- Figur 1: eine schematische Draufsicht eines Prüfroboters gemäß einer Ausführungsform der vorliegenden Erfindung, der ohne Abdeckung dargestellt ist, um die einzelnen Komponenten des Prüfroboters besser darstellen zu können;
- Figur 2: eine Unteransicht des in Figur 1 dargestellten Prüfroboters;
- Figur 3: eine vergrößerte Ansicht des in Figur 1 mit dem Bezugszeichen III versehenen Ausschnitts, wobei sich das dargestellte Rad in einer ausgelenkten Position befindet;
- Figur 4: eine schematische Darstellung eines Ultraschallprüfkopfes des in Figur 1 dargestellten Prüfroboters;
- Figur 5: eine Seitenansicht einer Kamera des in Figur 1 dargestellten Prüfroboters, die einen Bestandteil einer Positionserfassungseinrichtung bildet;
- Figur 6: eine schematische Darstellung des Prüfroboters während der Prüfung von Nutverschlusskeilen eines Generators und
- Figur 7: eine geschnittene Teilansicht des Rotors des in Figur 6 dargestellten Generators.

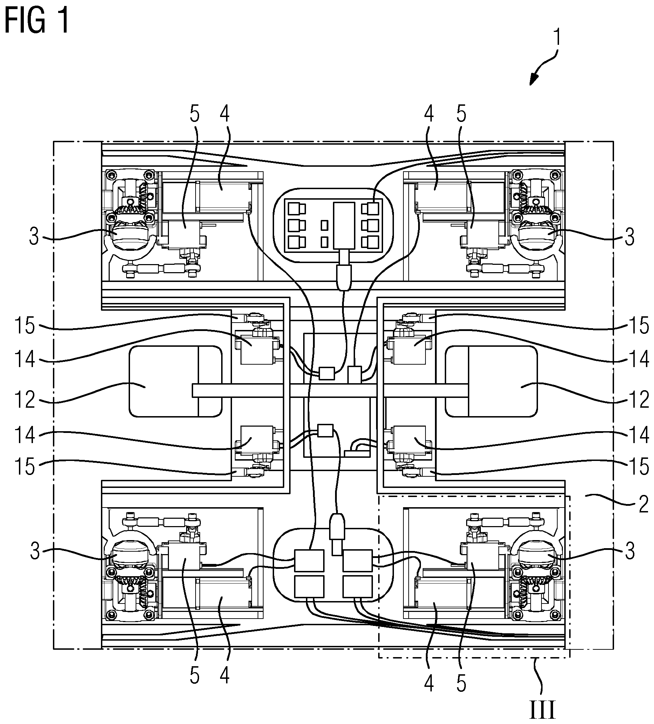

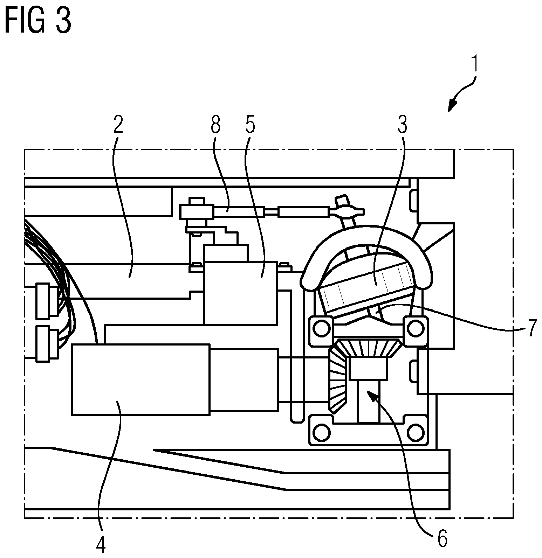

Die Figuren 1 bis 5 zeigen einen Prüfroboter 1 gemäß einer Ausführungsform der vorliegenden Erfindung bzw. Komponenten desselben. Der Prüfroboter 1 umfasst ein Fahrgestell 2, das vorliegend ausgehend von CAD-Daten additiv aus einem Fotopolymer gefertigt wurde. Das Fahrgestell 2 nimmt ein Antriebssystem auf, das vier am Fahrgestell 2 drehbar gehaltene Räder 3 aufweist, die jeweils über einen Schrittmotor 4 drehend antreibbar sind und über einen Servomotor 5 gelenkt werden können, wie es in Figur 3 gezeigt ist. Die Schrittmotoren 4 sind orthogonal zur Drehrichtung der Räder 3 montiert und treiben diese über Kegelradgetriebe 6 an. Alle Räder 3 sind drehbar gelagert und über nicht näher dargestellte Kardangelenke mit der zugehörigen Drehachse 7 verbunden. Am freien Ende jeder Drehachse 7 greift ein Kurbelarmsystem 8 an, das mit dem zugehörigen Servomotor 5 verbunden ist, so dass die Räder 3 über den zugehörigen Servomotor 5 gelenkt werden können. Die Räder 3 selbst sind an ihren Laufflächen zur Verbesserung der Haftung mit einem groben Schleifmittel beschichtet. An dem Fahrgestell 2 sind ferner in den mit der Bezugsziffer 9 gekennzeichneten Bereichen nicht näher dargestellte Magnete angebracht, vorliegend Neodym-Magnete, deren Anzahl und Position derart gewählt ist, dass sie den Prüfroboter an einem magnetischen Untergrund anhaftend halten können.

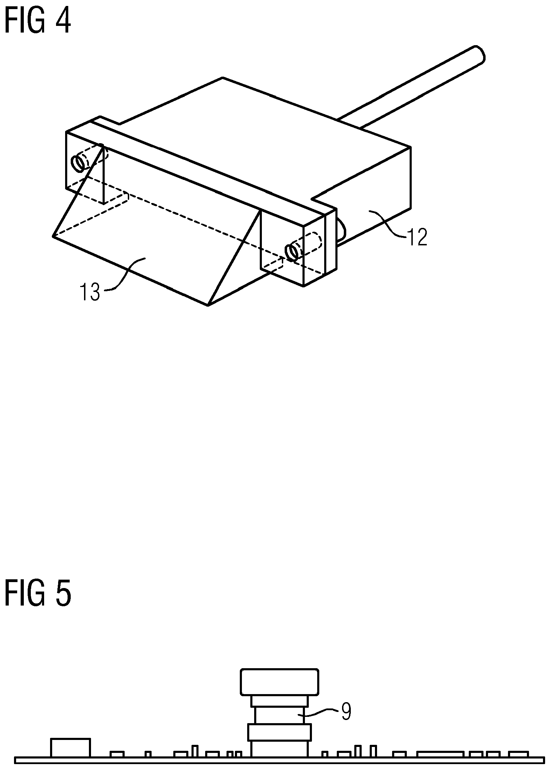

Ferner umfasst der Prüfroboter 1 eine am Fahrgestell 2 aufgenommene Positionserfassungseinrichtung, die vorliegend zwei am Fahrgestell 2 angeordnete und abwärts gerichtete Kameras 10 gemäß Figur 5 sowie Leuchten 11 zur Ausleuchtung der Kamerabilder aufweist.

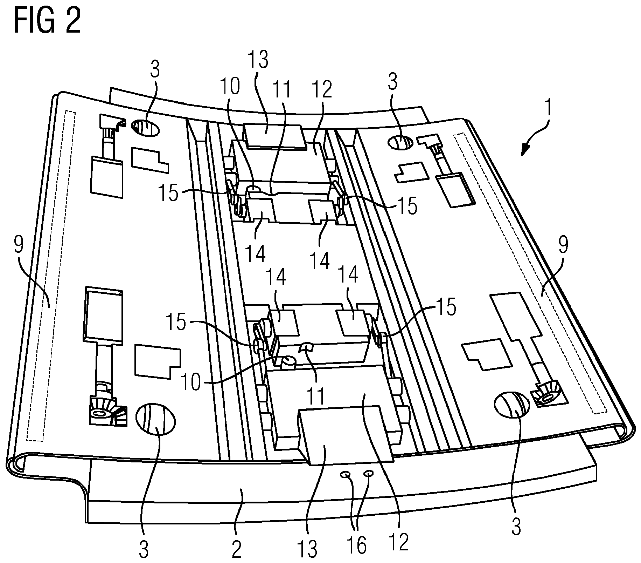

Darüber hinaus sind, wie es insbesondere in Figur 2 gezeigt ist, im mittleren Bereich der Unterseite des Fahrgestells 2 voneinander beabstandet zwei Ultraschallprüfköpfe 12, die vorliegend jeweils mit einer Schallfrequenz von 2 MHz arbeiten, orthogonal zu ihrer Prüfrichtung angeordnet, die jeweils mit einem die vom Ultraschallprüfkopf 12 emittierten Ultraschallwellen orthogonal umlenkenden Vorlaufkeilen 13 versehen sind, siehe Figur 4. Jeder der Ultraschallprüfköpfe 12 ist über zwei Servomotoren 14 auf- und abwärts bewegbar, was vorliegend über entsprechend ausgebildete Kurbelarmsysteme 15 realisiert ist, welche die Servomotoren 14 mit dem zugeordneten Ultraschallprüfkopf 12 verbinden. Jedem Ultraschallprüfkopf 12 ist eine Koppelmittelapplikationseinrichtung 16 zugeordnet, mit der zur Durchführung einer Ultraschallmessung erforderliches, elektrisch nicht leitendes Koppelmittel auf einen zu prüfenden Gegenstand aufgetragen werden kann. In einem separaten Gehäuse 17 sind ein Koppelmittelreservoir 18, das über Koppelmittelleitungen mit den jeweiligen Koppelmittelapplikationseinrichtungen 16 verbindbar ist, sowie einer Pumpe 19 vorgesehen, unter deren Verwendung das in dem Koppelmittelreservoir 18 enthaltene Koppelmittel zu den Koppelmittelapplikationseinrichtungen 16 gefördert werden kann.

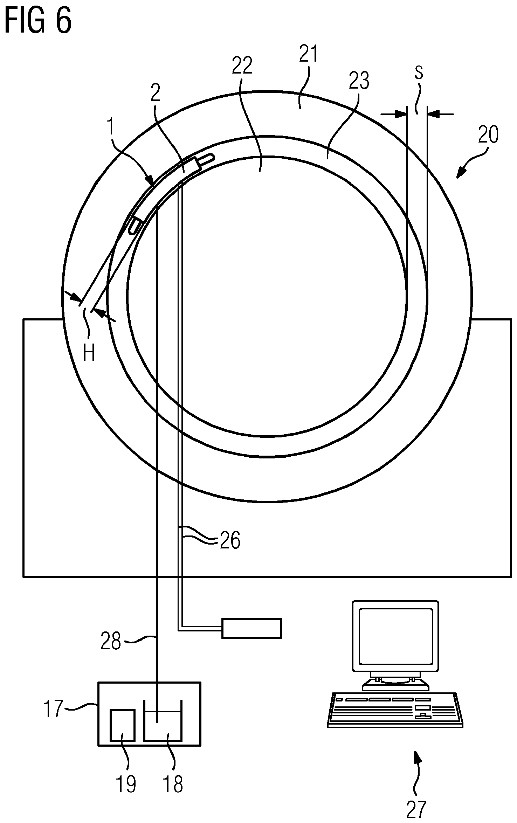

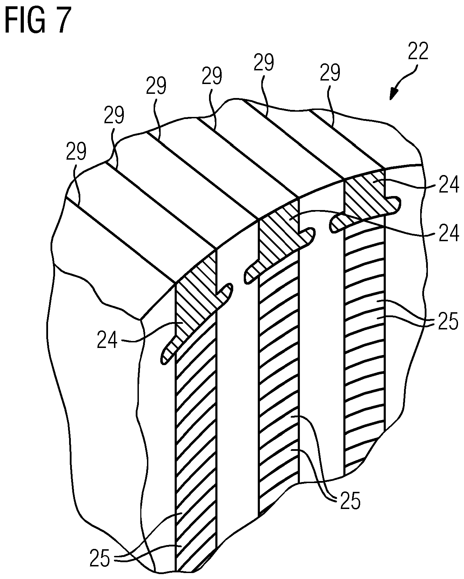

Die Figuren 6 und 7 zeigen einen Generator 20 mit einem Stator 21 und einem Rotor bzw. Läufer 22, die durch einen Ringspalt 23 voneinander getrennt sind. Am Außenumfang des Rotors 22 ist eine Vielzahl von Nutverschlusskeilen 24 vorgesehen, die dazu dienen, die am Rotor 22 angeordneten Kupferwicklungen bzw. Kupferstäbe 25 an Ort und Stelle zu halten.

Zur Prüfung der Nutverschlusskeile 24 des Rotors 22 wird der Prüfroboter 1 in einem ersten Schritt über geeignete Kabel 26 mit einer Steuerung 27 verbunden, bei der es sich vorliegend um einen herkömmlichen Rechner mit geeigneter Software handelt. Ferner werden die Koppelmittelapplikationseinrichtungen 16 des Prüfroboters 1 über Koppelmittelleitungen 28 mit dem Koppelmittelreservoir 18 verbunden. Daraufhin wird der Prüfroboter 1 derart in den zwischen dem Stator 21 und dem Rotor 22 vorhandenen Ringspalt 23 eingesetzt, dass die Unterseite des Fahrgestells 2 in Richtung des Rotors 22 weist. Die Außenabmessungen des Prüfroboters 1 bzw. des Fahrgestells 2 sind dabei an das Spaltmaß des Ringspaltes 23 angepasst. Mit anderen Worten ist die Höhe H des Prüfroboters 1 etwas kleiner als das Spaltmaß s des Ringspaltes 23 gewählt. Darüber hinaus ist das Fahrgestell 2 entsprechend dem Radius des Ringspaltes 23 gebogen ausgeführt, wie es insbesondere in Figur 6 zu erkennen ist. In einem weiteren Schritt können unter Einsatz der Ultraschallprüfköpfe 12 Ultraschallmessungen durchgeführt werden, während der Prüfroboter 1 über den Rotor 22 des Generators 21 bewegt wird. Hierzu wird eine geeignete Menge von Koppelmittel 16 über die Koppelmittelapplikationseinrichtungen 16 auf die Oberfläche des Rotors 22 aufgetragen, woraufhin die Ultraschallprüfköpfe 12 unter Einsatz der Servomotoren 14 in Richtung des Rotors 22 bewegt und auf dessen Oberfläche bzw. auf das Koppelmittel aufgesetzt werden. Die von den Ultraschallprüfköpfen 12 erfassten Daten werden an die Steuerung 28 übertragen und dort in bekannter Weise weiterverarbeitet, insbesondere auch visuell wiedergegeben. Um den Prüfroboter 1 geradlinig entlang eines zu überprüfenden Nutverschlusskeils 24 bewegen zu können, nutzt die Positionserfassungseinrichtung vorliegend die zwischen einem Nutverschlusskeil 24 und dem Rotorballen vorhandenen Fugen 29. Genauer gesagt erfassen die Kameras 10 Ist-Ausrichtungen des Prüfroboters 1 zu einer der Fugen 29, woraufhin die Steuerung 27 die erfassten Ist-Ausrichtungen mit gespeicherten Soll-Ausrichtungen abgleicht und das Antriebssystem basierend auf dem Ist-Soll-Abgleich ansteuert, genauer gesagt die Servomotoren 5, um eine gewünschte Auslenkung der einzelnen Räder 3 zu bewirken. Der vom Prüfroboter 1 zurückzulegende Weg entspricht somit dem Verlauf der entsprechenden Fuge 29. Da die Fuge 29 mit beiden Kameras 10, die jeweils einer Achse des Prüfroboters 1 zugeordnet sind, registriert und ausgewertet wird, kann eine Orientierung an der Fuge 29 stattfinden. Hierzu wird vorliegend vorab ein Vergleichsbild der Fuge zur Systemkalibrierung aufgenommen. Durch den durch die Leuchten 11 bewirkten Schattenwurf entsteht ein deutlicher Kontrast zwischen beleuchtetem Bereich und dem Fugenschatten, der sich als Linie darstellen lässt. Ein von den Kameras 10 aufgenommenes Bild stellt dabei ein zweidimensionales Array mit Werten dar, auf dem basierend sich mit Hilfe von bekannten Bildverarbeitungsmethoden die Position der Fuge 29 relativ zum Gesamtbild ermitteln lässt. Hierbei kommen diverse Algorithmen zur Kantendetektion in Frage, die sich beispielsweise unter Verwendung von Microsoft Visual Studio 2017 und der Erweiterung EmguCV in C# realisieren und ausprobieren lassen. Es hat sich gezeigt, dass die Verwendung eines Kreuzkorrelations-Algorithmus in Kombination mit der Verwendung eines Schwellwerts die besten Ergebnisse liefert. Durch den Vergleich des Kamerabildes mit dem zuvor aufgenommenen Vergleichsbild lässt sich die Position der Fuge 29 auf dem Kamerabild ermitteln, wodurch eine Regelung der zu verfahrenden Trajektorie des Prüfroboters 1 möglich wird. Die Regelgröße ist hierbei der Auslenkungswinkel der vier Räder 3. Es handelt sich hierbei um eine proportionale Regelung, die auf der "Firmata" Bibliothek aufbaut. Diese lässt sich in Visual Studio 2017 einbinden und übernimmt hierbei die serielle Kommunikation und die Verwaltung aller digitalen Ein- und Ausgänge der Arduino Boards, die vorliegend für die Schrittmotoren 4 und die Servomotoren 5 eingesetzt wurden. Die eigentlichen Bildverarbeitungs- und Regelungsalgorithmen lassen sich dann in C# programmieren, greifen auf die Firmata Bibliothek zu und realisieren in Kombination mit der verbauten Leistungselektronik alle Funktionen. Die Aggressivität der Regelung lässt sich mit Hilfe eines Schiebereglers adaptiv durch den Bediener anpassen. Bei der Realisierung aller anderen Fahrparameter, wie zum Beispiel die Geschwindigkeit des Prüfroboters 1, handelt es sich um Steuerungsprozesse. Die Software der Steuerung 27 verfügt hierzu über entsprechende Modi.

Der Einsatz des erfindungsgemäßen Prüfroboters 1 ist insbesondere dahingehend von Vorteil, dass eine Prüfung der Nutverschlusskeile 25 auf eventuelle Beschädigungen erfolgen kann, ohne hierzu den Rotor 23 aus dem Stator 22 ausbauen zu müssen. Zumindest bei Befundfreiheit der Nutverschlusskeile 25 kann auf diese Weise sehr viel Zeit eingespart werden, was geringe Stillstandzeiten des Generators 21 und damit geringe Kosten nach sich zieht. Die Positionserfassungseinrichtung und das Antriebssystem garantieren hierbei eine sichere Führung des Prüfroboters 1 entlang der zu prüfenden Nutverschlusskeile 2.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Prüfroboter (1) zur Prüfung von Nutverschlusskeilen (24),
die am Außenumfang eines von einem Stator (21) umgebenen Rotors (22) eines Generators (20) vorgesehen sind, umfassend
ein ein Antriebssystem aufnehmendes Fahrgestell (2),
eine Positionserfassungseinrichtung,
eine Steuerung (27),
die das Antriebssystem basierend auf von der Positionserfassungseinrichtung erfassten Daten steuert,
am Fahrgestell (2) angebrachte Magnete (9),
die derart positioniert und ausgelegt sind, dass sie das Fahrgestell (2) am Rotor anhaftend halten,
zumindest einen an dem Fahrgestell (2) angeordneten, von der, in Richtung des Rotors weisenden Unterseite des Fahrgestells (2) frei zugänglichen sowie auf- und abwärts bewegbaren Ultraschallprüfkopf (12) und zumindest eine am Fahrgestell (2) vorgesehene,
dem Ultraschallprüfkopf (12) zugeordnete Koppelmittelapplikationseinrichtung (16),
wobei
das Antriebssystem drei oder vier am Fahrgestell (2) drehbar gehaltene Räder (3) zum Abrollen auf dem Rotor aufweist, wobei jedes Rad (3) über
einen Schrittmotor (4) drehend antreibbar und über einen Servomotor (5) lenkbar ist.

2. Prüfroboter (1) nach Anspruch 1,
**dadurch gekennzeichnet, dass**
das Fahrgestell (2) additiv aus einem Fotopolymer hergestellt ist.

3. Prüfroboter (1) nach Anspruch 1,
**dadurch gekennzeichnet, dass**
die Räder (3) mit einem groben Schleifmittel beschichtet sind.

4. Prüfroboter (1) nach einem der vorhergehenden Ansprüche,
**dadurch gekennzeichnet, dass**
es sich bei den Magneten (9) um Neodym-Magnete handelt.

5. Prüfroboter (1) nach einem der vorhergehenden Ansprüche,
**dadurch gekennzeichnet, dass**
die Positionserfassungseinrichtung zumindest zwei am Fahrgestell (2) angeordnete, abwärts gerichtete Kameras (10) und Leuchten (11) zur Ausleuchtung der Kamerabilder aufweist.

6. Prüfroboter (1) nach einem der vorhergehenden Ansprüche,
**dadurch gekennzeichnet, dass**
der zumindest eine Ultraschallprüfkopf (12) orthogonal zu seiner Prüfrichtung an dem Fahrgestell (2) angeordnet und mit einem die vom Ultraschallprüfkopf (12) emittierten Ultraschallwellen orthogonal umlenkenden Vorlaufkeil (13) versehen ist.

7. Prüfroboter (1) nach einem der vorhergehenden Ansprüche,
**dadurch gekennzeichnet, dass**
der zumindest eine Ultraschallprüfkopf (12) über zumindest einen Servomotor (14) auf- und abwärts bewegbar ist, insbesondere über zwei Servomotoren (14).

8. Prüfroboter (1) nach einem der vorhergehenden Ansprüche,
**dadurch gekennzeichnet, dass**
beabstandet von dem Prüfroboter (1) eine Pumpe (19) und ein mit der zumindest einen Koppelmittelapplikationseinrichtung (16) über eine Koppelmittelleitung (28) verbundenes Koppelmittelreservoir (18) vorgesehen sind.

9. Prüfroboter (1) nach Anspruch 8,
**dadurch gekennzeichnet, dass**
die Pumpe (19) und das Koppelmittelreservoir (18) in einem gemeinsamen Gehäuse (17) angeordnet sind.

10. Verfahren zur Prüfung von Nutverschlusskeilen (24), die am Außenumfang eines von einem Stator (21) umgebenen Rotors (22) eines Generators (20) vorgesehen sind,
unter Verwendung eines in einen zwischen dem Rotor (22) und dem Stator (21) vorhandenen Ringspalt (23) eingesetzten Prüfroboters (1) nach einem der vorhergehenden Ansprüche.

11. Verfahren nach Anspruch 10,
bei dem die Positionserfassungseinrichtung zumindest eine Ist-Ausrichtung des Prüfroboters (1) zu einer zwischen einem Nutverschlusskeil (24) und einem Rotorballen vorhanden Fuge (29) erfasst, die Steuerung (27) die erfasste Ist-Ausrichtung mit einer gespeicherten Soll-Ausrichtung abgleicht und das Antriebssystem basierend auf dem Ist-Soll-Abgleich ansteuert.

## Claims

1. Test robot (1) for testing slot wedges (24) which are provided on the outer circumference of a rotor (22) of a generator (20), which rotor is surrounded by a stator (21), comprising
a chassis (2) which accommodates a drive system,
a position capture device,
a controller (27) which controls the drive system on the basis of data captured by the position capture device,
magnets (9) which are fitted to the chassis (2) and are positioned and designed in such a manner that they keep the chassis (2) adhering to the rotor,
at least one ultrasonic test head (12) which is arranged on the chassis (2), is freely accessible from the underside of the chassis (2) pointing in the direction of the rotor and can be moved up and down, and
at least one couplant application device (16) which is provided on the chassis (2) and is assigned to the ultrasonic test head (12),
wherein
the drive system has three or four wheels (3) which are rotatably held on the chassis (2) and are intended to roll on the rotor, wherein each wheel (3) can be driven in a rotational manner via a stepping motor (4) and can be steered via a servomotor (5).

2. Test robot (1) according to Claim 1,
**characterized in that**
the chassis (2) is additively produced from a photopolymer.

3. Test robot (1) according to Claim 1,
**characterized in that**
the wheels (3) are coated with a coarse abrasive.

4. Test robot (1) according to one of the preceding claims,
**characterized in that**
the magnets (9) are neodymium magnets.

5. Test robot (1) according to one of the preceding claims,
**characterized in that**
the position capture device has at least two downwardly directed cameras (10) which are arranged on the chassis (2) and lights (11) for illuminating the camera images.

6. Test robot (1) according to one of the preceding claims,
**characterized in that**
the at least one ultrasonic test head (12) is arranged orthogonally with respect to its testing direction on the chassis (2) and is provided with an approach wedge (13) which orthogonally deflects the ultrasonic waves emitted by the ultrasonic test head (12).

7. Test robot (1) according to one of the preceding claims,
**characterized in that**
the at least one ultrasonic test head (12) can be moved up and down via at least one servomotor (14), in particular via two servomotors (14).

8. Test robot (1) according to one of the preceding claims,
**characterized in that**
a pump (19) and a couplant reservoir (18) connected to the at least one couplant application device (16) via a couplant line (28) are provided at a distance from the test robot (1).

9. Test robot (1) according to Claim 8,
**characterized in that**
the pump (19) and the couplant reservoir (18) are arranged in a common housing (17).

10. Method for testing slot wedges (24) which are provided on the outer circumference of a rotor (22) of a generator (20), which rotor is surrounded by a stator (21), using a test robot (1) according to one of the preceding claims which is inserted into an annular gap (23) present between the rotor (22) and the stator (21).

11. Method according to Claim 10,
in which the position capture device captures at least one actual orientation of the test robot (1) with respect to a join (29) present between a slot wedge (24) and a rotor body, the controller (27) compares the captured actual orientation with a stored desired orientation and controls the drive system on the basis of the actual/desired comparison.

## Revendications

1. Robot (1) de contrôle pour le contrôle de cales (24) de fermeture d'encoche,
qui sont prévues sur le pourtour extérieur d'un rotor (22), entouré d'un stator (21), d'un générateur (20), comprenant un châssis (2) recevant un système d'entraînement,
un dispositif de détection de position,
une commande (27),
qui commande le système d'entraînement sur la base de données détectées par le dispositif de détection de position,
des aimants (9) montés sur le châssis (2),
qui sont positionnés et conçus de manière à ce qu'ils retiennent le châssis (2) en adhérence sur le rotor,
au moins une tête (12) de contrôle par ultrasons montée sur la châssis (2) mobile vers le haut et vers le bas, ainsi qu'accessible librement par le côté inférieur du châssis (2) tourné en direction du rotor, et au moins un dispositif (16) d'application d'un agent de liaison prévu sur le châssis (2) et associé à la tête (12) de contrôle par ultrasons,
dans lequel le système d'entraînement a, pour rouler sur le rotor, trois ou quatre roues (3) retenues avec possibilité de tourner sur le châssis (2), chaque roue (3) pouvant être entraînée en rotation par un moteur (4) pas à pas et pouvant être dirigée par un servomoteur (5).

2. Robot (1) de contrôle suivant la revendication 1,
**caractérisé en ce que**
le châssis (2) est fabriqué additivement en un photopolymère.

3. Robot (1) de contrôle suivant la revendication 1,
**caractérisé en ce que**
les roues (3) sont revêtues d'un agent abrasif grossier.

4. Robot (1) de contrôle suivant l'une des revendications précédentes,
**caractérisé en ce que**
les aimants (9) sont des aimants au néodyme.

5. Robot (1) de contrôle suivant l'une des revendications précédentes,
**caractérisé en ce que**
le dispositif de détection de position a au moins deux caméras (10) montées sur le châssis (2) et dirigées vers le bas et des lampes (11) pour l'éclairage des images des caméras.

6. Robot (1) de contrôle suivant l'une des revendications précédentes,
**caractérisé en ce que**
la au moins une tête (12) de contrôle par ultrasons est montée sur le châssis (2) orthogonalement à sa direction de contrôle et est pourvue d'une cale (13) d'avance déviant orthogonalement les ondes d'ultrasons émises par la tête (12) de contrôle par ultrasons.

7. Robot (1) de contrôle suivant l'une des revendications précédentes,
**caractérisé en ce que**
la au moins une tête (12) de contrôle par ultrasons peut être déplacée vers le haut et vers le bas par au moins un servomoteur (14), notamment par deux servomoteurs (14).

8. Robot (1) de contrôle suivant l'une des revendications précédentes,
**caractérisé en ce qu'**
il est prévu, à distance du robot (1) de contrôle, une pompe (19) et un réservoir (18) d'agent de liaison relié au au moins un dispositif (16) d'application d'un agent de liaison par un conduit (28) pour un agent de liaison.

9. Robot (1) de contrôle suivant la revendication 8,
**caractérisé en ce que**
la pompe (19) et le réservoir (18) d'agent de liaison sont disposés dans une enveloppe (17) commune.

10. Procédé de contrôle de cales (24) de fermeture d'encoche, qui sont prévues sur le pourtour extérieur d'un rotor (22), entouré d'un stator (21), d'un générateur (20), en utilisant un robot (1) de contrôle suivant l'une des revendications précédentes, inséré dans un espace (23) annulaire prévu entre le rotor (22) et le stator (21).

11. Procédé suivant la revendication 10,
dans lequel le dispositif de détection de position détecte au moins une orientation réelle du robot (1) de contrôle vers un joint (29) présent entre une cale (24) de fermeture d'encoche et une boule de rotor, la commande (27) aligne la direction réelle détectée sur une direction de consigne mise en mémoire et commande le système d'entraînement sur la base de l'alignement réel - consigne.
